# EUROPEAN PATENT APPLICATION

(11) **EP 1 003 273 A2**
(43) Date of publication of application: **24.05.2000**
(21) Application number: 99309210.5
(22) Date of filing: 18.11.1999
(51) Int. Cl.: H02M 3/155

(54) **Inductive boost circuit for disk drive**

(30) Priority: 20.11.1998 US 196824; 29.09.1999 US 407274
(71) Applicant: STMicroelectronics, Inc., Carrollton, TX 75006-5039 (US)
(72) Inventor: Menegoli, Paolo, San Jose, CA 95127 (US)
(74) Representative: Palmer, Roger

(57) **Abstract**

An inductive boost circuit (and method) for a disk drive boosts a first voltage from a voltage source in the disk drive to a second voltage (boosted voltage) higher than the first voltage. The boost circuit utilizes an inductive device to boost the voltage. The boosted voltage is used to power elements or components in the disk drive. In one embodiment, the boosted voltage provides power/control to a VCM motor driver circuit to park the read/write head after power-down of the disk drive. In other embodiments, the boosted voltage is sufficient to power (or voltage) the disk drive and/or other element(s) of the disk drive under normal operating conditions to allow a reduction in the voltage of the primary voltage supply to the disk drive.

## Description

The invention disclosed broadly relates to the field of disk drive systems, and more particularly, relates to a boost circuit (and method) for use in disk drive systems.

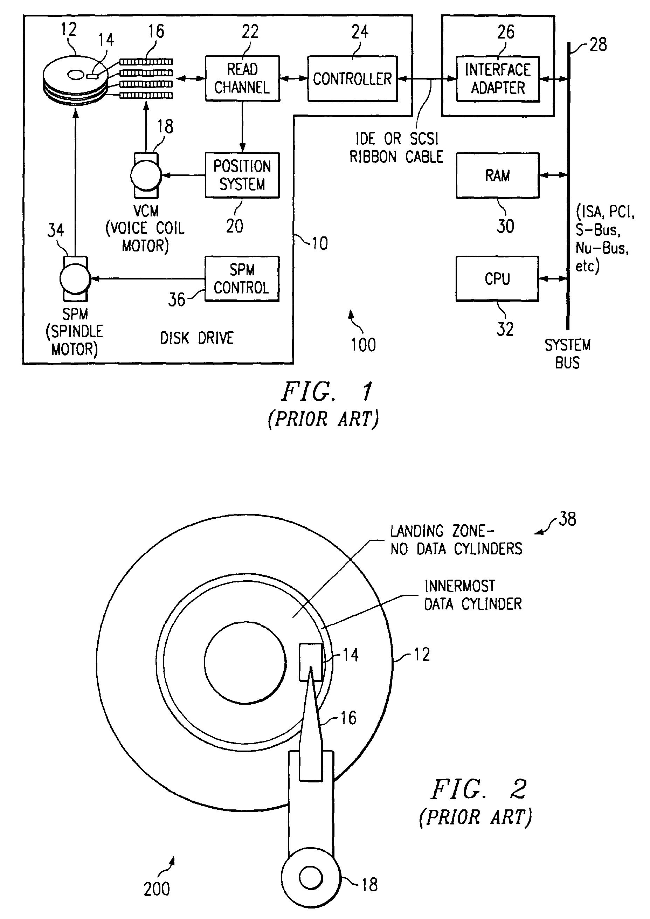

Referring to FIGURE 1, there is shown a disk drive system 100 containing a disk drive 10. The disk drive 10 includes a storage medium in the form of one or more disks 12, each of which may contain data on both sides of the disk 12. Data is stored on the disks 12 and/or read from the disks 12 by one or more read/write heads 14. The head 14 is connected to an arm 16, with both controlled by a Voice-Coil Motor ("VCM") 18 and a position system 20. The position system 20, through the VCM 18, keeps the head 14 positioned radially over the desired data on the disks 12. As current passes through the VCM 18, the VCM 18 moves the head 14.

A read channel 22 detects data in analog signal form from the head 14 and converts the data into digital form. A controller 24 recognizes and organizes the digital data from the read channel 22 into bytes of data. An interface adapter 26 adapts the bytes of data from the controller 24 to a host system bus 28 specific to the host system used. Typical host system buses include ISA, PCI, S-Bus, Nu-Bus, etc. The host system will also typically have other devices, such as a random access memory ("RAM") 30 and a central processing unit ("CPU") 32 attached to the bus 28.

A spindle motor ("SPM") 34 and a SPM control 36 keep the disks 12 rotating and at the proper speed. As long as the disk 12 is spinning, the head 14 is designed to float above the surface. However, when the disk 12 stops spinning (or falls below a certain rpm), the head 14 lands on the surface of the disk 12. If the head 14 lands on the disk 12, the sliding during stopping and starting could damage the stored data. In those situations when the disk 12 stops spinning, such as power down or sleep mode, the head 14 should be moved to a portion of the disk where there is no stored data. Now referring to FIGURE 2, there is shown a simplified drawing 200 which depicts an area 38 where there is no stored data, referred to as a landing zone 38.

The procedure for moving the head 14 before the disk 12 spins down works well as long as the position system 20 has enough lead time. One common event in which lead time is lacking is when power to the disk drive 10 is removed without first parking the head 14 (i.e., moving the head 14 to the landing zone 38). For 12 volt systems, such as typical desk-top computers which generally use either 3.5 inch or 5.25 inch disks, the power-down event has been addressed by designing a boost circuit that provides a voltage source for a limited period of time to the VCM 18 after power-down to allow the VCM 18 to park the head 14.

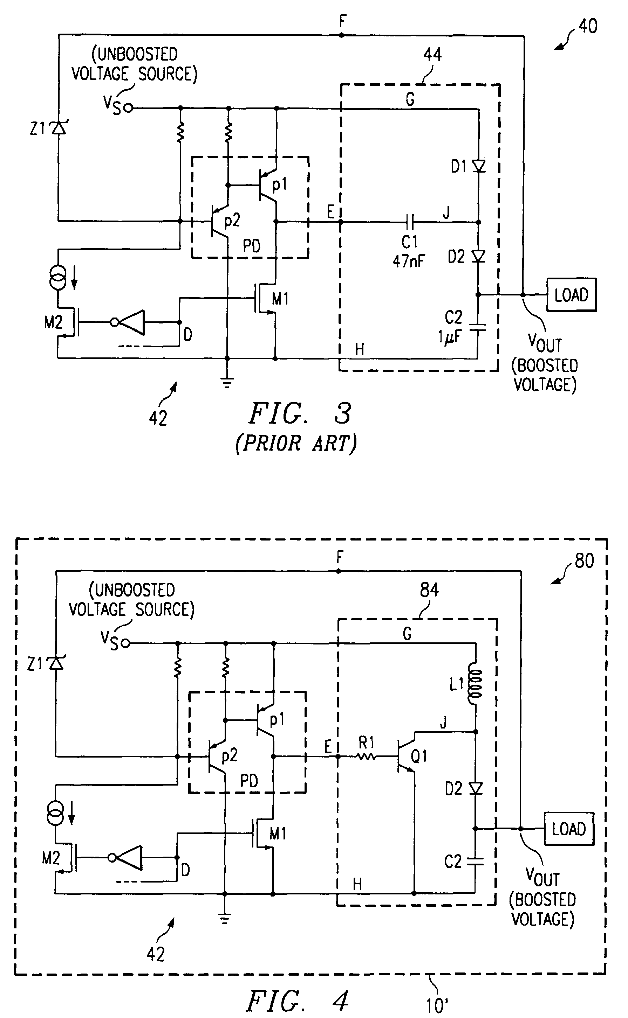

Now referring to FIGURE 3, there is illustrated a prior art boost circuit 40. The boost circuit 40 provides a voltage source (Vout) having a voltage level above the level of the unboosted voltage source (Vs). Typically, during power-on, the source of the unboosted voltage is the power supply voltage of the disk drive 10 (or disk drive system 100), while during power-down (or power-off), the source is the spindle motor (i.e., inductive phases of the spindle motor), the back electromotive force ("back emf") of the spindle motor, or other element(s) or component(s) of the disk drive 10. The spindle motor source and the back emf source are generated from the spinning of the SPM 34. In addition to being used as feedback to help the SPM control 36 keep the disks 12 rotating at the correct speed, the back emf can therefore also used by the boost circuit 40 to supply power during power-down.

The boost circuit 40 includes a pump circuit 42 and a capacitive boost circuit 44, which combined is called a charge pump. This type of solution is common because it is cost effective and has a limited noise injection in the supply line. The charge that is produced is proportional to C*V, where C is the capacitance of the capacitor C1 and V is the supply voltage. In other words, the amount of charge pumped to capacitor C2 equals C1*V. As C1 or V is varied, the ability of the circuit to supply charge for storage across the capacitor C2 will also vary. The energy stored across the capacitor C2 is equal to C2*(2(V-Vb)), and will be described below.

The spindle motor, back emf or any other source of voltage, can be boosted by the circuit of FIGURE 3. The unboosted voltage source Vs is applied to the node G. In the application of FIGURE 3, Vcc, the supply voltage, is applied to node G during normal operations. On power-down, however, the unboosted voltage source from the spindle motor 34 (which will still be spinning for a period of time) is applied to node G. The boost circuit 40 also includes circuitry designed to clamp the boosted voltage at a level above the reference or supply voltage, typically between about 5 to 6 volts above the supply voltage.

The operation of the boost circuit 40 shall be briefly explained as follows. At node D, a clocking signal (usually logic level) is applied which oscillates at a frequency typically less than 1 megahertz, preferably in the 200 kilohertz range. The clocking signal turns the transistors M1 and M2 on and off. Transistors M1 and M2 operate in opposite phases due to an inverter coupled to the gate of the transistor M2. When transistor M1 is on, the left plate of a capacitor C1 (node E) is at a voltage potential approximately equal to the ground reference, and the right plate (node J) is at a potential of Vs - Vb, where Vb is the forward bias voltage for a diode D1, which is about 0.7 volts for a standard diode, the capacitor C1 is therefore charged to Vs - Vb.

When the transistor M2 is on and the transistor M1 is off, then a transistor P1 of a pnp Darlington pair PD is turned on. This causes the potential at node E to rise to approximately Vs. The potential difference between node J and ground also immediately rises by the same amount to roughly 2*Vs - Vb (assuming that there is no load on the right plate of the capacitor C2). This is a result of the charge stored on the right plate of the capacitor C1.

The charge on the right plate of the capacitor C1 then conducts to the top plate of a capacitor C2 (node F), through a diode D2. The capacitor C2 is eventually charged to a voltage of 2*Vs - 2*Vb, and thus the voltage on the node F ("VBOOST") is also at this level. A load utilizing the boosted voltage is coupled to node F, as is shown in FIGURE 3.

If the capacitance value of the capacitor C1 is less than the capacitance value of the capacitor C2, then the charging of the capacitor C2 will take multiple cycles to complete. In the example under consideration, the capacitance of the capacitor C1 is 47 nanofarads and the capacitance of the capacitor C2 is 1 microfarad. The capacitor C2 is thus roughly 20 times larger than the capacitor C1, and 20 clock cycles (that is, 20 cycles of the clocking signal at node D) will therefore be required to charge the capacitor C2 (assuming no load). The transistor M1 and the transistor P1 of the Darlington pair thereby operate as a driver for charging the capacitors C1 and C2.

The clamping feature is achieved with the zener diode Z1. Zener diode Z1 is selected so that at a reverse-bias potential of about 5.5 volts above the voltage source Vs, the zener diode Z1 will enter the zener region and act as a short circuit. This will take away current from the Darlington pair PD and prevent the transistor P1 from turning on.

When the supply voltage is 12 volts, common in desk-top computers, the boost circuit 40 provides sufficient boost voltage. For lower supply voltages, however, the maximum voltage and the load current (instantaneous and steady state) capability diminishes. The load current capability is due to several factors, including the sizes of the capacitors C1 and C2, the voltage supply, and the frequency of the oscillating signal at node D. The instantaneous load current capability (assuming fully charged C2) is related to the size of the capacitor C2 and the voltage supply because the stored energy is equal to C2*(2(V-Vb)), as described above. The steady state load current capability (assuming C2 greater than C1) is related to the size of the capacitor C1, the voltage supply, and the oscillating signal at node D. Therefore, for a relatively low value for the oscillating frequency, the capacitor C1 or supply voltage, the steady state load current capability will be lower.

This limitation is a problem in desktop computers that desire to utilize a 5-volt or lower supply. One circuit developed to help reduce the problem uses a 3-stage capacitive boost circuit, as described in U.S. Patent No. 5,438,504, titled "Voltage Multiplier Circuits or the Like," assigned to SGS-Thomson Microelectronics, Inc., filed on Oct. 8, 1993 and issued on Aug. 1, 1995, and incorporated herein by reference.

Accordingly, there is exists a need for a boost circuit for use in low-voltage disk drive systems.

In accordance with the present invention, there is provided a boost circuit coupled to a second supply voltage for generating a first supply voltage. The boost circuit includes an inductive device coupled to the second supply voltage and a charge-storing device coupled to the inductive device for generating the first supply voltage. A pump circuit initiates or generates the flow of current through the inductive device at a predetermined frequency and develops a voltage potential across the charge-storing device.

In another embodiment of the present invention, there is provided a boost circuit for generating a boosted voltage signal form a first voltage source in a disk drive system. The boost circuit includes an inductive device having a first terminal and a second terminal with the first terminal of the inductive device coupled to the first voltage source, with the inductive device apart from an inductive phase of a spindle motor of the disk drive. A first circuit generates a voltage potential across the inductive device and is coupled to the second terminal of the inductive device. The boost circuit also includes a diode having a first terminal and a second terminal,with the first terminal coupled to the second terminal of the inductive device, and a capacitor having a first terminal and a second terminal, with the first terminal of the capacitor coupled to the second terminal of the diode and the second terminal of the capacitor coupled to a second voltage source, wherein the boost circuit generates the boosted voltage signal across the capacitor.

In still another embodiment of the present invention, there is provided an apparatus for supplying power to a disk drive after power-down of the disk drive. The apparatus includes a voltage source generating a first voltage after power-down of the disk drive and a boost circuit. The boost circuit is coupled to the voltage source for boosting the first voltage and outputting a second voltage greater than the first voltage. The boost circuit includes an inductive device operable as a discrete component and coupled to the voltage source and a charge-storing device coupled to the inductive device for generating the second voltage and outputting the second voltage to a load in the disk drive.

In accordance with yet another embodiment of the present invention, a method is provided for boosting voltage from a voltage source in a disk drive. The method includes the steps of generating a first voltage from the voltage source within the disk drive system, boosting the first voltage to a second voltage by an inductive boost circuit (the inductive boost circuit comprising an inductive device apart from an inductive phase of a spindle motor) to a second voltage greater than the first voltage, and outputting the second voltage to a load in the disk drive.

Some embodiments of the invention will now be described by way of example and with reference to the accompanying drawings in which:
FIGURE 1 shows a disk drive system containing a disk drive according to the prior art;
FIGURE 2 illustrates a landing zone on a disk, according to the prior art;
FIGURE 3 is a schematic of a boost circuit according to the prior art;
FIGURE 4 is a schematic of a boost circuit according to the present invention:
FIGURE 5 is a preferred embodiment of the present invention; and
FIGURE 6 is an alternative embodiment of the present invention.

The preferred embodiment solves the problem of the prior art by using an inductive boost circuit to generate a boosted voltage for use in disk drive systems. The unboosted voltage signal may originate from any component or element in the disk drive system.

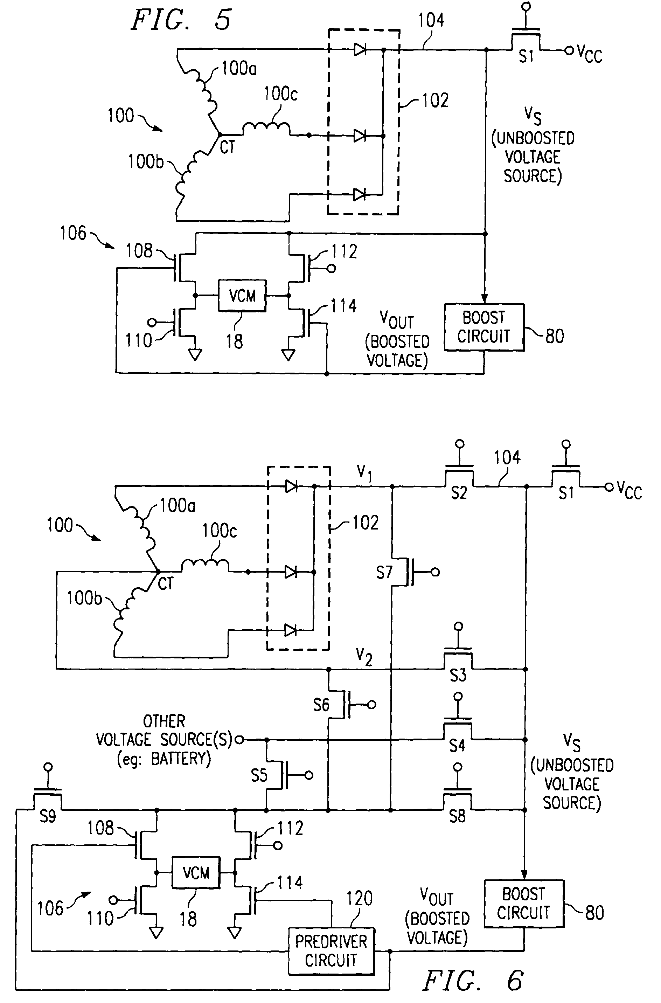

Referring now to FIGURE 4, there is a disk drive 10' in accordance with the present invention. The disk drive 10' includes essentially the same components/elements as the disk drive 10 shown in FIGURE 1, including a boost circuit 80 in accordance with the present invention. The boost circuit 80 includes the pump circuit 42 and an inductive boost circuit 84. The pump circuit 42 also includes voltage clamping capabilities. As will be appreciated, the pump circuit 42 is the same pump circuit utilized in the boost circuit 40 (see FIGURE 3), but any configuration and/or circuit may be used if suitable to perform the desired function. The operation of the boost circuit 80 is described below.

As the signal at node D oscillates, the transistor M1 is turned on and off. When the transistor M1 is off and the transistor M2 is on, then the transistor P1 is on and a transistor Q1 of the inductive boost circuit 84 is turned on. Current flows through an inductor L1 of the inductive boost circuit 84 and through the transistor Q1.

When the transistor M1 is on, the transistor M2 is off, the transistor P1 is off, and the transistor Q1 is off. However, the current through the inductor L1 (or any inductor) is not stopped immediately and the voltage at node J goes above Vs. This causes a diode D2 of the inductive boost circuit 84 to be forward biased and a capacitor C2 of the inductive boost circuit 84 is charged by the current flowing through the diode D2. The lower the frequency, the bigger the buildup of current. A load is shown in FIGURE 4 coupled to the capacitor C2 (the boosted voltage output).

Now referring to FIGURE 5, there is illustrated a preferred embodiment of the present invention. The spindle motor 32 (see FIGURE 1) includes stator windings 100 arranged/connected in three electrical phases, 100a, 100b, 100c. The phases are wye-connected together at a center tap CT, as shown in FIGURE 5. Each of the three motor phases are coupled to a spindle motor driver circuit 102. During rotation, the three motor phases generate currents that are rectified by inherent diodes present in the spindle motor driver circuit 102 (see FIGURE 5), thus producing a rectified voltage from the spindle motor 32. This rectified voltage (and direct current) is passed to a bus 102 for carrying a voltage, referred to as the unboosted voltage source Vs. As will be appreciated, at power down when primary power source Vcc is removed, a switch S1 opens and isolates the bus 104 from the power source Vcc. In the preferred embodiment, Vcc, the supply voltage, is applied during normal operations.

In the preferred embodiment, the unboosted voltage source Vs generated from the spindle motor 32 (output from the diodes of motor control driver circuit 102) is applied to the boost circuit 80 and supply power to high-side driver transistors 108, 112 of a VCM driver circuit 106. The boost circuit 80 generates a boosted voltage source Vout used to drive transistors 108, 114 of the driver circuit 106, thereby providing a higher voltage at the gate of transistors 108, 114 than at the supply side of the transistors. The unboosted voltage source Vs present after power down of the disk drive provides actuation of the VCM 18 to park the head 14 of the disk drive 10'. The boosted voltage V out is also used to drive transistors in the spindle motor control circuit 102 during normal operations (not shown). Also, during normal operations or power down, the boosted voltage Vout can be used to perform any of the variety of other functions that require a voltage which is higher than the supply voltage. As will be appreciated, the switch ST or other device (not shown) can be used to isolate the bus 102 from the Vcc source.

On power-down, is input to the boost circuit 80. The unboosted voltage source Vs is used to supply power to the VCM 18 (through the use of drive transistors 108, 110, 112, 114) thereby providing current to VCM 18 sufficient to park the head 14. Additionally, the unboosted voltage source Vs can be used to brake the spindle motor, if such feature is desired. Meanwhile, the boosted voltage Vout output from the boost circuit 80 is used to drive (turn on) the transistors 108,114 resulting in the VCM 18 parking the head 14. As will be appreciated by those skilled in the art, the boosted voltage Vout may be used to perform other desired functions as well.

Generally, the unboosted voltage Vs generated from the spindle motor 32 (output from the diodes) in 5-volt desktop and laptop applications is typically in the range of 2 to 3 volts. In the preferred embodiment, this is the voltage source that is utilized as the unboosted voltage source Vs during the power-down procedure. The boost circuit 80 of the present invention does not have the same limitation on maximum boosted voltage as the prior art boost circuit 40 illustrated in FIGURE 3. The Vout of the boost circuit 80 is not limited to 2*Vs -2*Vb. The preceding is true if the voltage clamping circuit (including the zener diode Z1) is omitted. However, a voltage clamp for damping Vout to a level about 5 to 6 volts above Vs is included to ensure that the circuit does not exceed specified limits (if any).

Referring again to FIGURE 4, the energy which the inductor L1 can store, and which can then be transferred to the capacitor C2, is given by 0.5*L1*I². The current is the most significant factor because it is squared. The preferred embodiment uses, therefore, an inductor with a low series resistance (less than 1 ohm) in order to allow a higher current. When Q1 is turned off, the energy gets stored in C2. The energy stored on the capacitor C2 is given by 0.5*C2*V². There is, therefore, basically no limitation to the amount of voltage that can build up on the capacitor C2 (other than the inherent limitations of the elements/circuits utilized). The inductor L1 is operates as a discrete component and/or is apart (i.e., separate, discrete) from the inductive phases 100a, 100b, 100c of the spindle motor 32.

It will be understood by persons skilled in the art that the boost circuit 80 of the present invention also performs satisfactorily when the unboosted voltage Vs is less than about 3 volts - thereby working well when the primary power Vcc is relatively low as well. Voltage levels on the order of about 1 volt, and perhaps less depending on the selection of circuit elements, will still allow the boost circuit 80 to achieve desired results. For example, applications utilizing a 3.3 volt (approximately) supply voltage will work with the preferred embodiment. Such applications can be expected to have a spindle motor voltage of roughly 1.2 to 1.5 volts. In the preferred embodiment (with a 5.5-volt zener diode), the boosted voltage V out would be clamped at roughly 6.7 to 7.0 volts. Alternate embodiments could use different Zener diodes or different clamp circuits, however, and clamp the voltage at any level.

In the preferred embodiment, the transistor Q1 is a generic npn-type transistor. The inductor L1 is in the range of 20-50 microhenries (with very low resistance) and the capacitor C2 is between 1-5 microfarads. The value of a resistor R1 of the inductive boost circuit 84 is preferably between 100 ohms to a few Kohms. The diode D2, as in the prior art, is a standard diode. Alternate embodiments may deviate from these suggested ranges of the preferred embodiment.

The function of the resistor R1 is to control the amount of current provided to the inductor L1. Generally, as the resistance R1 decreases, the base current of the transistor Q1 increases, which in turn, increases the emitter current. The diode D2 functions to decouple the output from the switching transistor Q1 and keep current from flowing from the capacitor C2 (i.e., discharging C2) into the transistor Q1 when the transistor Q1 is turned on. The size of the transistor Q1 generally depends on the amount of desired current flowing through the transistor Q1, and a bigger component (and perhaps lower on-resistance) is typically required for higher values of current. Although the preferred embodiment for the transistor Q1 is an npn-type transistor, alternate embodiments can use a variety of devices, including but not limited to other types of transistors such as MOSFETs and DMOS.

Many variations of the boost circuit 80 are possible without deviating from its basic function. One such variation is to add an additional resistor (not shown) in the inductive boost circuit 84 in series with the inductor L1 to limit the build up of current. It will also be clear to those skilled in the art that the inductive boost circuit 84 can be used with many different pump circuits 42.

Now referring to FIGURE 6, there is illustrated an alternative embodiment of the present invention. With reference to FIGURE 5, transistors S2-S9 have been added, as shown in FIGURE 6, and alternative voltage sources have been identified for coupling to the bus 104. Also, a predriver circuit 120 is include which controls the voltages to the gates of the transistors 108, 114. A similar predriver circuit 120 may be utilized in the circuitry shown in FIGURE 5, but is not shown for purposes of clarity.

One alternative voltage source is from the center tap (sometimes referred to as back electromotive force, or 'bemf) of the stator windings 100 of the spindle motor 32. Other sources can be utilized and are designated as "OTHER VOLTAGE SOURCE(S)" in FIGURE 6. One specific source that may be utilized is from a battery.

As will be appreciated, selective operation of the transistors S2-S9 will result in numerous combinations of sources for the unboosted voltage source Vs and the power source for the high side drivers 108, 112 of the VCM driver circuit 106. For example, when transistors S2, S4-S6, S8, and S9 are turned off, and transistors S3 and S7 are turned on, voltage V1 is powering the VCM driver circuit 106 and the center tap CT (bemf) is providing the source of unboosted voltage to the boost circuit 80 for generation of the boosted voltage Vout to drive the transistors 108, 114. Similarly, other powering schemes can be utilized, as desired. Also, when transistor S9 is turned on, and transistors S5-S8 are off, the boosted voltage Vout is utilized to supply power to the transistors of the driver circuit 106, as well as act as the source for driving transistors 108, 114.

Although preferred and alternative embodiments of the invention has been disclosed, it will be understood by those having skill in the art that changes can be made to this specific embodiment without departing from the spirit and scope of the invention. The scope of the invention is not to be restricted, therefore, to the specific embodiment, and it is intended that the appended claims cover any and all such applications, modifications, and embodiments within the scope of the present invention.

## Claims

1. A circuit for generating a boosted voltage from a first supply voltage, the circuit comprising:
a boost circuit coupled to the supply voltage and generating the boosted voltage, the boost circuit comprising,
an inductive device coupled to receive the supply voltage, and
a charge-storing device coupled to the inductive device for generating the boosted voltage; and
a pump circuit for generating current through the inductive device at a predetermined frequency and for developing a voltage potential across the charge-storing device.

2. The circuit in accordance with Claim 1 wherein the supply voltage is generated from a source in a disk drive.

3. The circuit in accordance with Claim 1 wherein the inductive device comprises an inductor separate and discrete from an inductive phase of a spindle motor, and the charge-storing device comprises a capacitor.

4. The circuit in accordance with Claim 1 wherein the supply voltage is coupled to a voice coil motor driver circuit for providing power to the voice coil motor, and the boosted voltage generated by the charge-storing device controlling operation of the voice coil motor driver circuit to park a head of a disk drive after power-down of the disk drive.

5. A boost circuit for generating a boosted voltage signal from a first voltage source in a disk drive, the circuit comprising:
an inductive device having a first terminal and a second terminal, the first terminal of the inductive device coupled to the first voltage source, the inductive device apart from an inductive phase of a spindle motor of the disk drive;
a first circuit for generating a voltage potential across the inductive device and coupled to the second terminal of the inductive device;
a diode having a first terminal and a second terminal, the first terminal of the diode coupled to the second terminal of the inductive device; and
a capacitor having a first terminal and a second terminal, the first terminal of the capacitor coupled to the second terminal of the diode and the second terminal of the capacitor coupled to a second voltage source, wherein the circuit generates the boosted voltage signal across the capacitor.

6. The circuit in accordance with Claim 5 wherein the first terminal of the capacitor defines a first node and the first node is coupled to a load in the disk drive system.

7. The circuit in accordance with Claim 5 wherein the load comprises a voice coil motor driver circuit.

8. The circuit in accordance with Claim 5 wherein the load comprises a braking system for the spindle motor.

9. The circuit in accordance with Claim 5 wherein a source of the first voltage supply is the back electromotive force of a motor of the disk drive.

10. The circuit in accordance with Claim 5 wherein the first circuit for generating a voltage potential across the inductive device comprises a switch.

11. The circuit in accordance with Claim 5 wherein a source of the first voltage supply is a battery.

12. An apparatus for supplying power to a disk drive after power-down of the disk drive, the apparatus comprising:
a voltage source generating a first voltage after power-down of the disk drive; and
a boost circuit coupled to the voltage source for boosting the first voltage and outputting a second voltage greater than the first voltage, the boost circuit comprising,
an inductive device operable as a discrete component and coupled to the voltage source, and
a charge-storing device coupled to the inductive device for generating the second voltage and outputting the second voltage to a load in the disk drive.

13. The circuit in accordance with Claim 2 or 5 or 17 wherein the voltage source is a rectified voltage of the spindle motor.

14. The apparatus in accordance with Claim 12 further comprising a voice coil motor for parking ahead of the disk drive, and the load comprises a voice coil motor driver circuit for activating the voice coil motor after power-down of the disk drive.

15. The circuit in accordance with Claim 12 wherein the voltage source is coupled to a voice coil motor driver circuit for providing power to the voice coil motor, and the second voltage generated by the charge-storing device controlling operation of the voice coil motor driver circuit to park a head of a disk drive after power-down of the disk drive.

16. The circuit in accordance with Claim 12 or 13 or method of Claim 18 wherein the first voltage is about three volts or less.

17. The circuit in accordance with Claim 12 or 13 or method of Claim 18 wherein the first voltage is between about one volt and three volts.

18. A method of boosting voltage from a voltage source in a disk drive comprising the steps of:
generating a first voltage from the voltage source within the disk drive;
boosting the first voltage to a second voltage by an inductive boost circuit, the second voltage greater than the first voltage, the inductive boost circuit comprising an inductive device apart from an inductive phase of a spindle motor; and
outputting the second voltage to a load in the disk drive.

19. The method in accordance with Claim 18 wherein the step of boosting the first voltage to the second voltage comprises the steps of:
generating a current through an inductive device; and
charging, to the second voltage, a capacitor with at least a portion of the current flowing through the inductive device.
